# EUROPÄISCHE PATENTSCHRIFT

(11) **EP 0 731 955 B1**
(45) Veröffentlichungstag und Bekanntmachung des Hinweises auf die Patenterteilung: **06.02.2002**
(21) Anmeldenummer: 95903777.1
(22) Anmeldetag: 04.10.1994
(51) Int. Cl.: G06K 9/03

(54) **VERFAHREN UND VORRICHTUNG ZUM AUTOMATISCHEN ERFASSEN UND ERKENNEN VON AUFGEZEICHNETER INFORMATION**
PROCESS AND DEVICE FOR AUTOMATICALLY DETECTING AND RECOGNISING RECORDED INFORMATION
PROCEDE ET DISPOSITIF DE SAISIE ET D'IDENTIFICATION AUTOMATIQUE D'INFORMATIONS ENREGISTREES

(43) Veröffentlichungstag der Anmeldung: 18.09.1996
(73) Patentinhaber: Kleindienst Solutions GmbH & Co. KG, 86165 Augsburg (DE)
(72) Erfinder: KUNZMANN, Hubert, D-86916 Kaufering (DE)
(74) Vertreter: Grosse, Wolfgang, Dipl.-Ing.
(86) Internationale Anmeldenummer: EP9403286
(87) Internationale Veröffentlichungsnummer: WO9610802

(56) Entgegenhaltungen:
- EP-A- 0 618 544
- EP-A- 0 622 751
- FR-A- 2 085 133
- US-E- R E31 692
- PROCEEDINGS OF THE INTERNATIONAL CONFERENCE ON PATTERN RECOGNITION (ICPR), ROME, 14 - 17 NOV., 1988, Bd. 2, INSTITUTE OF ELECTRICAL AND ELECTRONICS ENGINEERS, Seiten 739-743, XP 000093652 CIARIELLO G ET AL 'AN EXPERIMENTAL SYSTEM FOR OFFICE DOCUMENT HANDLING AND TEXT RECOGNITION'
- IBM TECHNICAL DISCLOSURE BULLETIN, Bd. 30, Nr. 3, August 1987 NEW YORK, US, Seiten 1112-1114, ANONYMOUS 'Automatic Font Selection for Character Recognition'
- NACHRICHTEN ELEKTRONIK, Bd. 35, Nr. 4, 1981 HEIDELBERG DE, Seite 164-5 J. SCHÜRMANN 'Maschinelles Erkennen von Schriftzeichen'
- IBM TECHNICAL DISCLOSURE BULLETIN, Bd. 35, Nr. 1B, Juni 1992 NEW YORK NY, Seite 22-4 'amount recognition system'
- SYSTEMS & COMPUTERS IN JAPAN., Bd. 23, Nr. 5, 1992 NEW YORK NY, Seiten 55-66, T KAWATANIT ET AL 'Shape quantification of handprinted numerals using recognition results and its application'

## Beschreibung

Die Erfindung betrifft ein Verfahren sowie eine Vorrichtung zum automatischen Erfassen und Erkennen von aufgezeichneter Information, insbesondere von Schriften auf Belegen.

Die automatische Erkennung von Schriften (Druckschriften verschiedener Typen sowie Handschrift) durch elektronische Verfahren ist ein bedeutendes Gebiet der heutigen Anwendungen der Informatik. Ihre Verbreitung in den Anwendungsbereichen Banken, Postwesen, Versicherungen, Handel und Industrie ist besonders groß, weil sie eine effiziente und sichere Dateneingabe gewährleistet.

Es ist bekannt, zur Erfassung und Erkennung der Daten von Belegen (z.B. Zahlungsverkehrsbelegen) automatisch arbeitende Lese- und Bearbeitungssysteme einzusetzen. Hierzu werden sogenannte Belegleser eingesetzt, die in Computernetzwerke integriert sind. Kameras, Elektronik und geeignete Computerprogramme ermöglichen eine Erfassung, Interpretation, und soweit erforderlich eine manuelle Korrektur, Abstimmung, Differenzbeseitigung, Kontrolle und Weitergabe von gelesenen Daten, Sortierung und dgl.. Das softwaregesteuerte System kann während der Einlesephase mittels des klassischen OCR-Systems (Optical Character Recognition System) die Belege steuern, verfilmen, indossieren und gleichzeitig um Blindfarben bereinigte digitale Abbildungen der Belege in Echtzeit herstellen. Eine Digitalisierungskamera nimmt mit der Geschwindigkeit des Beleglesers das digitale Abbild der Überweisungsbelege mit sehr hoher Auflösung auf.

Ab einer gewissen Betragsgrenze (DM 500) werden in der Bundesrepublik Deutschland für Überweisungen die orangenen Vordrucke verwendet. Diese enthalten die vollständigen Auftraggeber- und Empfänger-Informationen, eine vollständige Bezeichnung der Kreditinstitute, den Betrag und den Verwendungszweck. Ein Beleg kann mit unterschiedlichen Maschinenschriften und/oder mit einer Handblockschrift ausgefüllt sein. In den üblichen Bankbelegen können bis zu 250 Zeichen eingetragen werden. Von diesen Belegen werden täglich einige Millionen verarbeitet. Der Vorteil für die Kreditinstitute besteht u.a. darin, daß die Gutschrift für den Empfänger nicht an mehreren Stellen wiederholt bearbeitet werden muß, solange bis der Beleg an dem kontoführenden Institut angelangt ist, sondern daß der erfaßte Datensatz elektronisch übermittelt werden kann.

Bei der Erfassung von Belegen, bei denen bestimmte Angaben mit Maschinenschriften und/oder handschriftlich erstellt sind, ergeben sich dadurch Schwierigkeiten, daß einerseits die einzelnen Buchstaben und Ziffern nicht in die dafür vorgesehenen Lesefelder einzeln eingetragen werden und andererseits dadurch, daß Handschriften sehr unterschiedlich und zum Teil kaum leserlich sind. Dies führt dazu, daß bei Universalschriftbelegen weitaus mehr Korrigierarbeit als bei der Verarbeitung der in Normschrift abgefaßten Daten einer Codierzeile von Belegen (z.B. Scheck) durchzuführen ist.

Es sind zahlreiche Lesegeräte auf dem Markt, welche universelle Leseprogramme für die Erkennung von Mischschriften wie z.B. Maschinenschrift, Handblockschrift, rein numerische oder alphanumerische Schrift oder bestimmte Handschrift-Einzelschreibweisen aufweisen. Dabei ist es nicht auszuschließen, daß schlecht geschriebene Belege in Teilen entweder nicht oder falsch gelesen werden. Wenn das Lesegerät Zeichen nicht erkennt, wird der Beleg einer Bearbeitungsstation zugewiesen, an welcher eine Person eine entsprechende Korrektur eingibt. Erkennt es ein schlecht geschriebenes Schriftzeichen fälschlicherweise als ein anderes Zeichen und bemerkt deshalb keinen Fehler, erfolgt bei einer derartigen unerkannten Falschlesung (Substitution) eine falsche Buchung.

Die personelle Korrekturmethode ist sehr arbeits- und kostenintensiv und erfordert sehr viel Personal. Bei dem Einsatz der bisherigen Lesegeräte muß bei Lifematerial von einer Rate der nicht erkannten Zeichen (Rejectrate) und Substitutionen (falsch erkannte Zeichen) von mehreren Prozent, bei schlechtem Material entsprechend höheren Prozentsätzen, ausgegangen werden. Dieser Wert kann, abhängig von der Art der eingelesenen Belegdaten, auch höher sein. In jedem Fall ist jedoch ein hoher Aufwand an anschließender Korrektur, Abstimmung und Kontrolle durch den Menschen notwendig. Trotz einiger selbst-verbessernder Software-Funktionen bleibt bei den genannten Belegmengen ein enormer manueller Aufwand an den Korrektur-Workstations vorhanden. Bundesweit sind hierfür zur Zeit einige tausend Personen an den Systemen tätig.

Wenn man davon ausgeht, daß beispielsweise in einem Kreditinstitut mittlerer Größe täglich bis zu 20.000 Belege mit handschriftlichen Eintragungen verarbeitet werden müssen, dann ergibt sich bei einer Rejectrate von 10% bereits ein Belegkorrekturaufwand von 10 bis 20 Zeichen pro Beleg. Da eine manuelle Vollerfassung noch mehr Arbeitskräfte erfordern würde, ist nur eine maschinelle Erfassung mit entsprechender Korrektur durch das Personal sinnvoll.

Weiterhin ist es von großer Wichtigkeit für Entwickler und für Anwender solcher Erkennungssysteme, die Güte der Erkennung feststellen zu können, um die Eignung eines Systems für eine konkrete Anwendung zu beurteilen, um eventuelle Optimierungen vorzunehmen sowie um Parametereinstellungen zu definieren, die die Erkennung optimal für die Kundenanforderungen gestalten. Die Erkennungsqualitätsmessung ist von besonderer Bedeutung bei Systemen, die mehrere parallele Erkennungen für dieselben Bilder verwenden, weil die Wahl der in Frage kommenden Erkennungssysteme von den Messungen abhängt.

Dabei ist die Definition von "Erkennungsqualität' keinesfalls selbstverständlich ebensowenig gleich für verschiedene Anwendungen bzw. für verschiedenes Material.

Die heute verwendeten Meßysteme gehen von einer Erkennungsqualitätsmessung auf der Zeichenebene aus, d.h. sie zählen die falsch erkannten Zeichen und messen die Erkennungsgüte eines Systems als Prozentsatz der gut erkannten und der falsch erkannten Zeichen im Verhältnis zur Gesamtanzahl der Zeichen. Einige Meßsysteme unterscheiden außerdem noch zwischen erkannten und unerkannten Zeichenerkennungsfehlem (Rejects bzw. Substitutionen). Außerdem ist bei den heutigen Meßsystemen der Zusammenhang zwischen gemessenem Material und Meßergebnissen nicht transparent. Somit ist die Vergleichbarkeit der Meßergebnisse im Allgemeinen nicht gegeben.

Ein neues Meßsystem muß durch Auswahl, Beschreibung, Verifikation und Qualifikation einer Referenz die Vergleichbarkeit von Meßergebnissen objektiv gewährleisten. Bei der Verifikation und Qualifikation der Referenz müssen solche Regeln definiert werden können, die sich dem Empfinden des menschlichen Auges opimal annähern.

Grundsätzlich ist Erkennungsqualität durch die Häufigkeit der auftretenden Erkennungsfehler definiert. Die Erkennungsfehler können entsprechend den Hauptanforderungen an Erkennungssystemen klassifiziert werden: Zerlegungsfehler und Zeichenerkennungsfehler.

Zerlegung heißt die Lokalisierung von Texffeldern (Trennung von Text, Leerraum und Bild), die Lokalisierung von Zeilen sowie die Lokalisierung von Zeichen innerhalb der Zeilen. Die auftretenden Zerlegungsfehler sind Feldfehler (Feldfehllokalisierungen oder Vertauschung von Feldern), Zeilenzerlegungsfehler und Längenfehler.

Zeichenerkennung heißt festzustellen, um welche Zeichen es sich handelt. Es gibt verschiedene Arten von Zeichenerkennungsfehlern: Erkannte Fehlerkennungen (Rejects) und unerkannte Fehlerkennungen (Substitutionen).

Ein weiterer Nachteil heute verwendeter Meßsysteme besteht darin, Zerlegungsfehler nicht getrennt zu berücksichtigen. Dadurch ist die Erkennungsqualitätsmessung nicht nur unvollvollständig, sondern wird auch die Messung der Zeichenerkennung verfälscht (eine Zeichenfehlerkennung kann eine versteckte Fehllokalisation sein).

Einige Erkennungssysteme sind auch auf die Ergebnisformattierung gerichtete. Formattierung heißt die Feststellung des semantisch relevanten Feldinhalts abhängig von einer Menge definierter Feldstrukturen (z.B. "Datum" = TT.MM.JJ oder TT.MM.JJJJ oder TT"Monat"JJJJ usw.) und die Abbildung dieses Inhalts auf eine ausgewählte Darstellungsweise. Zur Messung der Erkennungsqualität formattierter Interpretationsergebnisse ist eine "formattierte" d.h. auf die definierte Darstellungsweise gebrachte Referenz notwendig.

Bis heute gibt es kein wohldefiniertes und nachvollziehbares Meßverfahren zur Messung von Erkennungsqualität.

Der Erfindung liegt daher die Aufgabe zugrunde, ein Verfahren vorzuschlagen, durch welches eine gravierende Erkennungsverbesserung für eingelesene Schriftdaten erzielt wird. Ferner soll die Vermeidung von Substitutionsbuchungen optimiert werden, um damit das System wirtschaftlicher und sicherer zu machen.

Weiterhin soll der erforderliche Aufwand an Hard- und Software gegenüber herkömmlichen Lesesystemen nicht wesentlich erhöht und der beschriebene Korrekturaufwand verringert werden.

Diese Aufgabe der Erfindung wird mit einem Verfahren gemäß Anspruch 1 und eine Vorichtung gemäß Anspruch 15 gelöst. Vorteilhafte Ausführungsformen sind in den Unteransprüchen gekennzeichnet.

Erfindungsgemäß werden bei einem Verfahren zum automatischen Erfassen und Erkennen von aufgezeichnete Informationen, insbesondere Schriften auf Belegen, die Verfahrensparameter ständig optimiert. Dazu werden stichprobenartig die eingegebenen aufgezeichneten Informationen mit dem ausgegebenen entsprechenden Erkennungsergebnissen verglichen und in Abhängigkeit vom Ergebnis der Vergleiche werden die Verfahrensparameter so verändert, daß die Erkennungsergebnisse optimiert werden.

Unter Verfahrensparamter sind vorzugsweise auch Tabellen oder andere Zugriffsdaten zu verstehen, die bei der Erkennung eingesetzt werden.

Die Erfindung bietet den Vorteil, daß das Ergebnis der Schrifterkennung während der langfristigen Nutzung des Verfahrens fortlaufend automatisch auf den jeweiligen Nutzer optimiert wird, indem es sich den bestimmten Betriebsbedingungen dieses Nutzers anpaßt und Änderungen beim Nutzer und/oder der eingesetzten Hardware berücksichtigt.

Mittels der Erfindung wird die Erkennungsqualität des Systems erheblich gesteigert und der erforderliche personelle Korrekturaufwand stark vermindert.

Unter dem Begriff "Schrift" ist hier allgemein jede aufgezeichnete Informationen zu verstehen, die einem automatischen Erkenungsverfahren zugänglich ist. Diese aufgezeichneten Informationen können einerseits hand- oder maschinenschriftliche Eintragungen auf Belegen, Formularen usw. sein, aber andererseits auch Stimmaufzeichnungen umfassen, wie sie beispielsweise im Zusammenhang mit dem sogenannten Telefonbanking bekannt sind, wo der Bankkunde beispielsweise einen Banküberweisungsbeleg telefonisch ausfüllt, indem er die einzelnen Eintragung auf den verschiedenen Feldern telefonisch durchsagt. In diesem Fall wäre unter "Schrift" entweder die auf einem Datenträger aufgezeichnete Stimme oder die von einem vorgeschalteten Stimmerkennungsprogramm ausgegebenen Stimmerkennungsdaten zu verstehen.

Die Stichproben werden vorzugsweise durch ein sogenanntes Meßlabor (EQM-System) vorgenommen. Das Meßlabor vergleicht regelmäßig einen representativen Querschnitt des eingegebenen Nutzermaterials mit den dazu gehörigen Erkennungsergebnissen und optimiert das Verfahren auf der Grundlage der Vergleichsauswertung. Auf diese Weise kann die Eigenschaft der eingesetzten Schrifterkennungsverfahren (Interpreter) in Bezug auf das zu bearbeitende Material genau erforscht werden und die Gewichtung Interpreterergebnisse angepaßt werden.

Das EQM-System mißt Zerlegungs- und Erkennungsfehler und erlaubt dadurch eine differenziertere Beurteilung der gemessenen Ergebnisse. Um dies zu gewährleisten, müssen Messungen auf Beleg-, Feld- und Zeichenebene durchgeführt werden. Dies ist bei heutigen Meßsystemen nicht der Fall.

Vorteilhaft wird die Schrift durch wenigstens zwei parallele oder hintereinandergeschaltete unterschiedliche Schrifterkennungsverfahren interpretiert. Beim Vergleich zwischen den erfaßten Daten der eingesetzten Schrifterkennungsverfahren werden Substitutionen, bei denen ein Leser tatsächlich falsche Daten als "richtig" erkannt weitergibt, nahezu vermieden. Bei der Feststellung einer Erkennungsdiskrepanz wird eine Überprüfung erzwungen. Dabei werden in vorteilhafter Weise universelle Schriftleseverfahren eingesetzt, wobei die einzelnen Erkennungsverfahren derart aufeinander abgestimmt werden, daß sie jeweils für die Erkennung einer bestimmten Schriftart optimiert sind.

Das bedeutet, daß beispielsweise ein Lesegerät, welches für eine bestimmte Schreibschriftart eine optimale Erkennungsweise besitzt, dagegen für andere Schriften eine nicht so gute Erkennungsweise, mit einem anderen Lesegerät in Kombination arbeitet, welches wiederum für eine andere Schreibschriftart oder gerade für spezielle Buchstaben oder Zahlen optimal arbeitet, die von dem ersten Lesegerät nicht optimal erkannt werden. Wenn nun die Schrift von beiden Geräten interpretiert wird, dann wird auf jeden Fall durch die Kombination beider Geräte die Erkennungsqualität erhöht und damit die Anzahl der Fehlbuchungen bzw. bei einer automatischen Korrektur die Anzahl der erforderlichen Korrekturen durch Personal reduziert. Es kann gemäß der Erfindung auch in vorteilhafter Weise vorgesehen sein, daß die Erkennungsverfahren für einzelne Bereiche innerhalb unterschiedlicher Schriftarten optimiert sind, so daß man beispielswei Lesesysteme zusammenstellen kann, die besonders gut für die Erkennung von handschriftlichen Eintragungen geeignet sind. Die besondere Gefahr bei dem Einsatz von nur einem Lesegerät besteht gerade darin, daß das Gerät etwas als "richtig" erkennt, was tatsächlich falsch ist, so daß der "richtig" erkannte Datensatz zu einer Fehlbuchung führt.

Um den Fall möglichst auszuschließen, daß beide Lesegeräte an der gleichen Stelle ein Zeichen substituieren und es infolgedessen zu einer Fehlbuchung kommt, kann in vorteilhafter Weise vorgesehen sein, daß die Anzahl der von der Schrift durchlaufenen Schrifterkennungsverfahren, auf die Problemfälle spezialisiert, erhöht wird.

Wird nun aufgrund eines Schrifterkennungsverfahrens gegenüber einem anderen Erkennungsverfahren eine Erkennungsdiskrepanz festgestellt, dann wird vorteilhaft automatisch eine Überprüfung erzwungen, d.h. die Erkennungsdaten werden einer nachgeschalteten Station zugeleitet, an welcher eine Überprüfung auf den vermeintlichen Fehler hin erfolgt.

Die Korrektur kann automatisch maschinell oder in herkömmlicher Weise manuell durch eine Bearbeitungsperson erfolgen, wobei häufig auftretende Korrekturen vorteilhaft in einem Lexikon aufgenommen werden, daß bei der Zeichenerkennung als Erkennungshilfe mit herangezogen wird.

Der Abgleich zwischen den Ergebnissen aus den unterschiedlichen Schrifterkennungsverfahren erfolgt vorzugsweise durch einen Algorithmus, der auch die Umgebung des jeweils betrachteten Zeichens berücksichtigt. Im Ergebnis wird das Zeichen mit der größten Glaubwürdigkeit als das richtige Zeichen erkannt, wobei die Glaubwürdigkeit der einzelnen Zeichen vorteilhaft nach der Fuzzi-Logik-Terminologie (sicher,..., unsicher) berechnet wird.

Vorzugsweise wird für jedes zu erfassende und erkennende Zeichen ein ganzer Satz von Alternativzeichen erstellt wird, die jeweils nach ihrer Glaubwürdigkeit bewertet werden. So wird beispielsweise beim Lesen eines Buchstaben "D" im Idealfall dem Zeichen "D" die höchste Glaubwürdigkeit zugeordnet werden, aber auch andere Alternativen werden erwogen und auf ihre Wahrscheinlichtkeit hin geprüft; so wird das Erkennungsverfahren beispielsweise auch das Zeichen "P" für möglich halten und eine gewisse Glaubwürdigkeit zuordnen. Im Ergebnis stehen zu jedem eingebenen Zeichen mehrere alternative Erkennungszeichen für die Korrelation mit anderen Informationsquellen einschließlich dem Ergebnis des zweiten Erkennungsverfahrens zur Verfügung.

Die Berücksichtigung der Umgebung des betrachteten Zeichens ist beispielsweise hilfreich, wenn ein numerisches Zeichen zwischen zwei Alphazeichen steht. Es können dabei zusätzliche Informationsquellen wie beispielsweise Wörterbücher, Prüfziffern oder Verzeichnissen von Bankleitzahl sinnvoll eingesetzt werden. Erkennt beispielsweise ein Lesegerät bei dem handgeschriebenen Namen "Hubert" den Buchstaben b als die Ziffer 6 und ein anderes Lesegerät den Namen "Hubert" richtig, dann führt dieser Abgleich zu einer automatischen Richtigstellung, indem Alpha zwischen zwei Alpha als wahrscheinlicher angenommen wird, oder über einen Wörterbuchvergleich oder dgl. richtiggestellt und der weiteren Datenverarbeitung zugeleitet wird. Als weitere Entscheidungshilfe kann dabei "intelligentes" Lexikon herangezogen werden, das zu jedem bekannten Wort die Wahrscheinlichkeit seines auftretens beinhaltet. Aus diesem Lexikon können dann im Zweifelsfall diejenigen Worte herausgesucht werden, die mit den sicher erkannten Zeichen übereinstimmen. An den Stellen, der weniger sicheren Zeichen können aus dem Lexikon Substitutionsalternativen abgeleitet werden, deren Verträglichkeit mit dem vorgegeben Zeichen in der Weise getestet wird, daß die zu jedem unsicheren Zeichen ermittelten möglichen Alternativzeichen mit dem Vorschlag aus dem Lexikon abgegelichen werden. Das Zeichen mit der höchsten Wortwahrscheinlichkeit in Korrelation mit der höchsten Alternativwahrscheinlichkeit wird angenommen. Das Lexikon ist vorzugsweise als variables Lexikon gestaltet, das die Worthäufigkeiten als Verfahrensparameter ständig aktualisiert und den Nutzerbedingungen angepaßt wird.

Zu der Umgebung eines Zeichens gehört vorteilhaft auch das Feld, in welchem das Zeichen steht. So gibt es beispielsweise bei Bankbelegen rein numerische Felder (z.B. Bankleitzahl) wie auch reine Buchstabenfelder (z.B. Name des Geldinstituts). Bei rein numerischen Feldern ist das Problem schwieriger zu lösen, so daß es hier gegebenenfalls der Korrektur durch eine Bearbeitungsperson bedarf. Wenn in einem rein numerischen Feld z.B. die Zahl 1 wie eine Zahl 7 ohne Querstrich geschrieben wird, dann kann bei der Erkennung einer 1 durch das eine Lesegerät und der Erkennung einer 7 durch das andere Lesegerät entsprechend reagiert werden. Auf jeden Fall wird eine Substitutionsbuchung vermieden, da erkannt wurde, daß eine Diskrepanz bei der Ziffer vorliegt. Die Erkennungsqualität kann vorteilhaft noch dadurch gesteigert werden, daß die Einzelergebnisse der Zeichenerkennung feldübergreifend kombiniert werden, wenn aus einem Verzeichnis die Kombinationsmöglichkeiten von Feldwerten bekannt sind, wie beispielsweise in der Kombination Bankleitzahl und Name des Geldinstituts, oder Kontonummer und Name des Kontoinhabers, wobei der Zusammenhang in beiden Richtungen verwendet wird, z.B. die Kontonummer über den Namen oder der Namen über die Kontoummer im Zweifelsfall richtiggestellt wird. Ähnlich gilt auch für Datumsfelder, wo aus der Tatsache, daß es sich bei den Zeichen in diesem Feld um ein Datum handelt, zusätzliche Erkennungshilfen abgeleitet werden können, die die verschiednen möglichen Formatierungen für Datumsangaben berücksichtigen. Auch diese Verzeichnisse von Kontonummern oder Bankleitzahlen können als intelligente Lexika vorgesehen werden, die ständig automatisch aktualisiert werden.

Die intelligenten Lexika sind vorteilhaft auch variabel in der Wortlänge, sodaß auch Zeichenverdopplungen oder Zeichenverschmelzungen behandelt werden können.

Zusätzlich können noch besondere Substitutionslexika verwendet werden, die bestimmte wiederkehrende Worte durch vorgebene Worte ersetzen. Das ist z.B. dann hilfreich, wenn bestimmte Ausdrücke auf einem Beleg von einem bestimmten Bankkunden immer wieder falsch oder unverständlich geschrieben werden und der tatsächlich gemeinte Ausdruck bekannt ist.

In vorteilhafter Weise erfolgt der Datenabgleich aufgrund der auf dem Informationsträger (z.B. Beleg) selbst enthaltenen Daten. Wenn beispielsweise ein Beleg eine Handschrift-Buchstaben- und/oder Ziffernfolge aufweist, dann kann der Rechner einen Vergleich zwischen der charakteristischen Handschrift und den vorgegebenen Buchstaben und/oder Ziffern durchführen. Aufgrund der erheblichen Speichermöglichkeiten von Daten können bestimmte Buchstaben- oder Zifferngruppierung eines bestimmten Kunden der Bank hinterlegt werden, sodaß der Rechner bei einem von dem gleichen Kunden ausgestellten Beleg einen Zeichenabgleich zwischen den hinterlegten und den im Beleg eingetragenen Zeichen durchführen kann.

Wenn beispielsweise aus der Berücksichtigung von individuellen Schreibweisen eine Person immer eine Sechs wie eine Null schreibt, dann wäre ein Vergleich durch den Rechner beispielsweise folgendermaßen herzustellen: Bei der Überprüfung der von der Person beschriebenen Bankleitzahl erkennt der Rechner die gleiche Null, stellt aber anhand eines Vergleichs der Adresse der Bank fest, daß die Null eine Sechs sein müßte. Der Rechner schließt darauf zurück, daß der Kunde im Betragsfeld die gleiche Ziffer Null eingetragen hat, die aufgrund des Vergleichs mit der Bankleitzahl eine Sechs sein könnte, so daß hier eine Prüfung im Betragsfeld erzwungen wird. Auf diese Art und Weise kann man noch weitere Datensätze als überprüfungsbedürftig erkennen, oder - falls dies von der Revision des Kreditinstitutes zugelassen wird - automatisch fehlerfrei stellen.

Wie sich aus vorstehenden Ausführungen ergibt, wird die Erkennungsqualität des Verfahrens zum automatischen Erfassen und Erkennen von aufgezeichneter Information wesentlich erhöht, indem die zu erfassenden Daten (Schrift) durch die kombinatorische Arbeitsweise von wenigstens zwei Erkennungseinheiten unterschiedlicher Verfahren als richtig erfaßt werden können, während sie durch einen Leser herkömmlicher Art wegen der Nichtinterpretation einzelner Daten zurückgewiesen wurden. Auch werden die Substitutionsbuchungen erheblich herabgesetzt.

Die Qualität der Erkennung hängt außer von dem verwendeten Erkennungssystem auch sehr stark von Struktur und Beschaffenheit das zu erkennenden Materials ab. Deswegen ist Erkennungsqualitätsmessung von größter Bedeutung für den Anwenden um das für die Anwendung optimale bzw. optimal eingestellte System auszusuchen. Der Anwender muß außerdem in einem praxisbezogenen Meßsystem die Meßstrategien entsprechend seiner Anwendungsgebiete bzw. Prioitäten definieren können.

Zum Beispiel kann die Gewichtung der verschiedenen Erkennungsfehler entsprechend den verschiedenen Anwendungsgebieten bzw. Anwenderphoritäten variieren. Erkannte und unerkannte Fehlerkennungen werden von den Anwendem sehr unterschiedlich bewertet. Selbst innerhalb desselben Dokumentes können Erkennungsfehler von Feld zu Feld verschieden bewertet werden zum Beispiel muß eine Substitution in einem Betragsfeld anders bewertet werden als eine Substitution in einem Mitteilungsfeld.

Für den Entwickler von Erkennungssystemen sind weitere Aspekte der Messung von Erkennungsqualität von Bedeutung. Er braucht eine detaillierte Analyse der erkennungsbeeinflußenden Eigenschaften seines Referenzmaterials, sowie eine feine Klassifizierung der Erkennungsfehler seines Systems.

Um solche Messungen effizient durchführen zu können ist das Meßabor zur Messung der Erkennungsqualität (EQM) vorgsehen. Dies implementiert die Verfahren zur Erkennungsqualitätsmessung und stellt Anwendern und Entwicklern die dazu nötigen Werkzeuge zur Verfügung. Hier werden Referenzen verifiziert, qualifiziert und klassifiziert Meßparameter und Anwendungspriodtäten an die Erkennung definiert, Interpretationsergebnisse importiert und ausgewertet. Dieses Labor implementiert die Erkennungsqualitätsmessverfahren und besteht aus Software und Hardwarekomponenten.

Die Begriffe, die dem EQM System zugrundeliegen, laßen sich in Referenzbegriffe und Auswertungszähler unterscheiden.

Die Referenz ist ein zentrales Element im EQM-System. Das System unterstützt Referenzgewinnung, Referenzverifikation, Referenzqualifikation und Referenzklassifizierung.

### Referenzgewinnung:

Zur Gewinnung von representativen Referenzen aus dem Belegmaterial werden im EQM-System ingenieurstatistische Verfahren angewandt (Auswahl eines von n Belegen).

### Referenzverifikation:

Referenzverifikation heißt die Bestimmung der Sollzeichen, wobei das Empfinden des menschlichen Auges als Maß genommen wird. Im EQM-System werden im Allgemeinen zwei Referenzen verifiziert: eine unformattierte Referenz zur Messung von Zerlegung und Erkennung und eine formattierte Referenz zur Messung von Zerlegung, Erkennung und Formattierung. Die Verifikation einer formattierten Referenz umfapt die Betimmung der Sollzeichen nach Feldstruktur und ausgewählter Darstellung. Zur einheitlichen Referenzverifikation sind im EQM-System Regeln definiert die zum Teil vom System automatisch überprüft werden.

### Referenzqualifikation:

Qualifikation der Referenz heißt die Bestimmung der erkennungsrelevanten Formular- und Schrifteigenschaften der statistisch gewonnenen Referenz. Die Menge dieser Eigenschaften ist im EQM-System frei definierbar, um den verschiedenartigen Anwender- und Entwicklerbedürfnissen gerecht zu werden. Qualifikation der Referenz ist die Feststellung der Prozentsätze dieser Eigenschaften in der Referenz.

### Referenzklassifizierung:

Eine Klassififierung der gesammelten Referenzen erfolgt nach den Eigenschaften, die bei der Qualifikation definiert wurden, aber auch nach regionalen Kriterien, nach Anwendungsgebieten usw. innerhalb der Referenzdatenbank des EQM Systems.

Ein erster Test mit tausend Belegen hat schon bei zwei unterschiedlichen Erkennungsverfahren mit intelligentem Abgleichsprogramm über beide Interpretationsergebnisse eine Verbesserung von ca. 70% gegenüber den bisherigen Lesefehlern ergeben. Bearbeitungskräfte werden nur noch für die Fälle benötigt, bei denen eine Eintragung als logisch falsch erkannt oder nicht automatisch bereinigbare Substitutionen zur Überprüfung ausgesondert oder von allen Lesern die gleichen Zeichen nicht erkannt wurden. Die Angestellten werden nicht mehr durch stupide Korrekturarbeiten belastet, sondern können stattdessen mit anspruchsvolleren Aufgaben betraut werden. Es können erhebliche Kosten eingespart werden. Die sog. EZÜ-Grenze (Elektronische Zahlungsüberweisung), d.h. diejenige Grenze, für welche Belege auf die vorbeschriebene Art und Weise bearbeitet werden (ab DM 500,-), kann erheblich herabgesetzt oder auf Null gesetzt werden. Das bedeutet, daß alle Belege, deren Beträge unter diesem Grenzwert liegen und die heute nur über die Kodierungszeile verarbeitet werden, ebenfalls über das vorbeschriebene Verfahren wirtschaftlich verarbeitet werden könnten, bei welchem die wesentlich umfangreicheren Informationen des Gesamtbeleges ausgewertet werden. Man kann mit den vorhandenen Arbeitsplätzen ein wesentlich größeres Volumen von Belegen bearbeiten, was durch die bisher bekannten Bearbeitungsverfahren noch nicht möglich ist.

Der Aspekt der verbesserten Erkennungssicherheit ist mindestens so hoch anzusetzen, wie der reduzierte Korrekturaufwand. Unentdeckte Substitutionen führen zu Falschbuchungen. Es hat sich bei der Testanwendung der Erfindung gezeigt, daß äußerst selten die gleichen Zeichen von unterschiedlichen Erkennungsverfahren substituiert werden, daß dies aber bei dem Einsatz von weiteren spezialisierten Erkennungsverfahren fast auszuschließen ist. Es ist deshalb auch möglich, aus Kostengründen nur für bestimmte Anwendungsfälle teure Erkennungsspezialisten für noch entdeckte Fehlerquellen nachzuschalten.

Es ist liegt im Rahmen der Erfindung, das beschriebene Verfahren nicht nur zur Erfassung und Erkennung von Zahlungsverkehrsbelegen einzusetzen, sondern auch in anderen Bereichen, z. B. im medizinischen Bereich für die Erfassung und Erkennung von Rezepten, bei anderen Feldinhalten wie z.B. Medikamentennummern und dgl. anzuwenden. Weitere mögliche Einsatzgebiete sind die Erfassung und der Verarbeitung von Wartungsberichten, Kreditkartenbelegen, Fertigungsbelegen, Abreißbelegen (z.B. Versandhäuser, Kaufhäuser), Rückläufern von Mailingaktionen, Wahlzetteln, Antragformularen, Adressänderungsformularen und dgl.

Weitere Merkmale und Vorteile der Erfindung ergeben sich aus der nachfolgenden Beschreibung von bevorzugten Ausführungsbeispielen anhand der Zeichnung. Darin zeigen:
- Fig. 1: eine Übersichtsdarstellung des kompletten Lesesystems gemäß der Erfindung;
- Fig. 2: eine Detaildarstellung der Digitalisierungsstation zur Erfassung der elektronischen Belegabbilder;

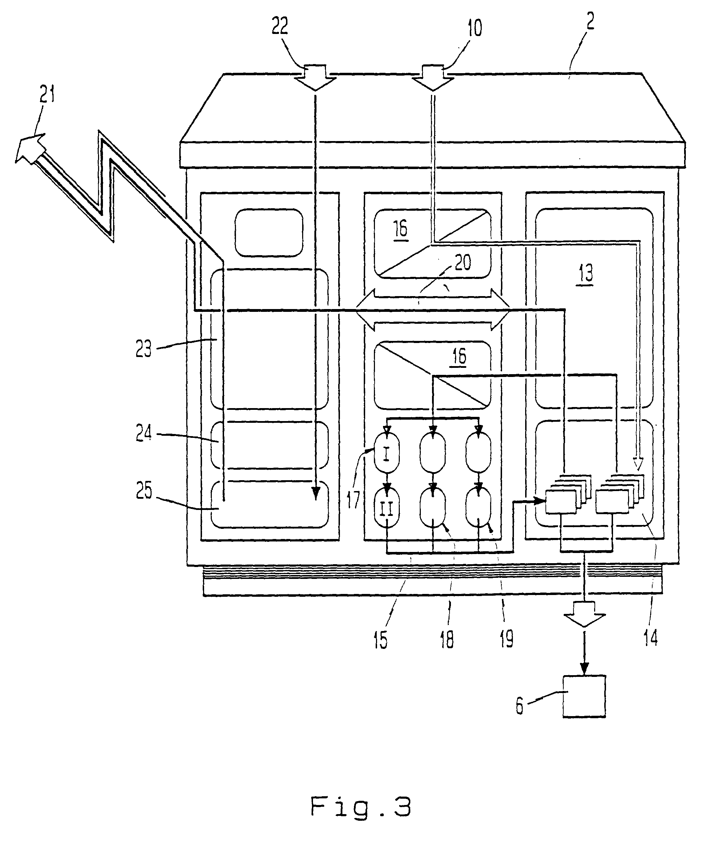

- Fig. 3: ein Bearbeitungssystem mit den Lesestationen gemäß der Erfindung;
- Fig. 4: ein schematisches Flußschaubild zur Erläuterung der Erhöhung der Erkennungsqualität, und
- Fig. 5: ein Flußschaubild zur Erläuterung der Vermeidung von Substitutionen.

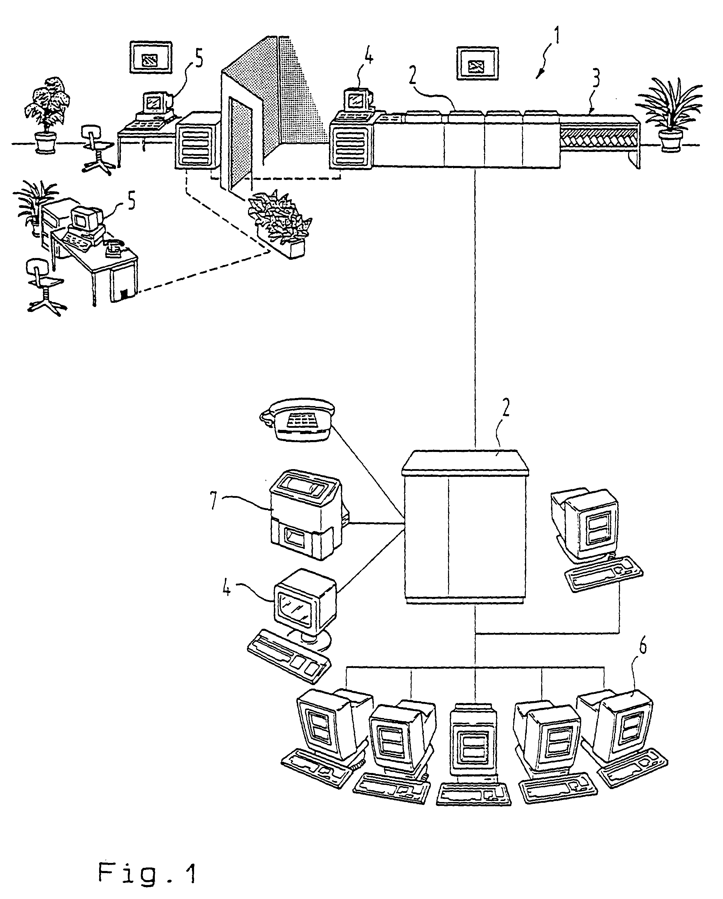

Die Übersichtsdarstellung in Fig. 1 zeigt beispielweise ein System zur Erfassung und Erkennung von Schriften auf Belegen und Formularen mit handschriftlichen Eintragungen und/oder Maschinenschriften, kurz als Lesesystem 1 bezeichnet. Dieses Lesesystem weist eine Kamera- und Interpretationsstation 2 auf, in welcher die Erfassung der elektronischen Abbildungen und Erkennung der Schriften durchgeführt wird. Dieser Station kann sich eine Sortierstation 3 für Codierzeilenbelege anschließen, in welcher die Belege entsprechend sortiert abgelegt werden. Das Lesesystem 1 ist mit Arbeitsstationen 4, 5, 6 verbunden. Die in das System 1 eingegebenen Belege werden mit einer Spezialkamera mit 10 Punkten pro Millimeter digitalisiert und ihre Daten in der Station 2 interpretiert.

An die Kamera- und Interpretationsstation 2 ist ferner eine Druckereinrichtung 7 angeschlossen.

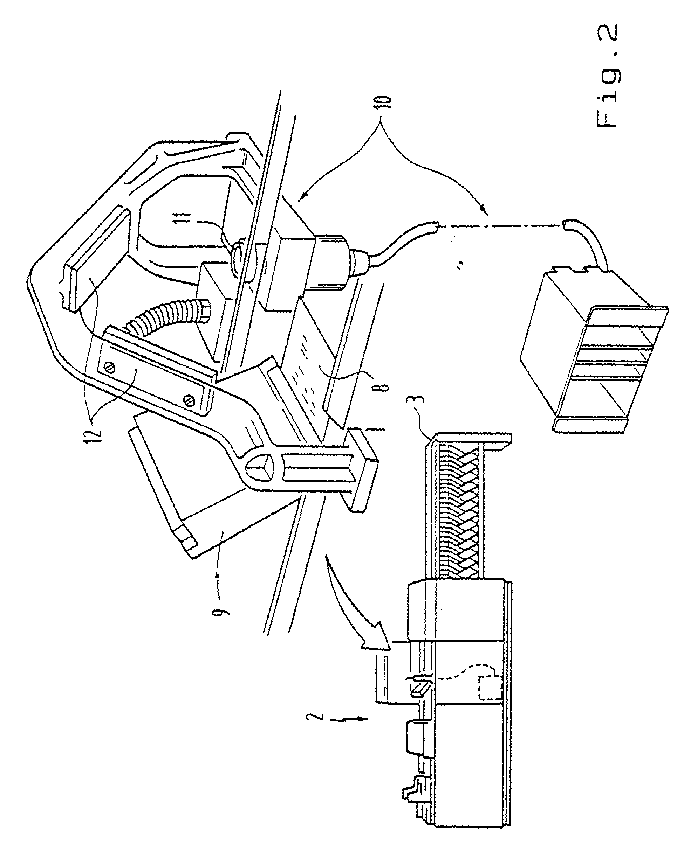

Die Fig. 2 zeigt die Digitalisierungskamera 10. Der Beleg 8 wird an einer Beleuchtungseinrichtung 9 vorbeigeleitet, wobei dies ohne Höhen- und Seitenversatz mit einer Geschwindigkeit von bis zu 4 m/sec geschieht. Die Abtastung der Belegdaten erfolgt über eine Spezialoptik 11, welcher die Belegdaten über ein Spiegelsystem 12 zugeleitet werden. Dabei werden die Daten mit einer Auflösung von 10 Punkten pro mm in beiden Richtungen mit je Punkt 256 Graustufen erfaßt. Das Kamerasystem ermöglicht eine Echtzeitanpassung von schwachem oder starkem Druck auf gleichen Schwarzwert und entsprechender Hintergrundsabstimmung, so daß die Daten im Rechner bereinigt zur Verfügung stehen.

Innerhalb der Steuerelektronik 2 werden die von der Kamera erfaßten Daten auf 10% in Echtzeit komprimiert 16. Die komprimierten Daten werden dann einem Rechner 13 zugeleitet und auf einer Magnetplatte 14 abgespeichert. Die abgespeicherten Bilddaten werden nun der eigentlichen Interpretationsstation 15 über eine Dekomprimierungsstation 16 zugeleitet. In der Interpretationsstation 15 erfolgt das Erkennen der Daten in der erfindungsgemäßen Weise. Beispielsweise sind hier drei Lesergruppen 17, 18, 19 mit jeweils zwei unterschiedlichen Erkennungsverfahren I und II dargestellt, die parallel oder hintereinander geschaltet sind. Die erkannten Zeichen werden von den Lesestationen I, II als AscII-Datensätze dem Magnetplattenspeicher 14 zugeleitet und abgespeichert. Die AscII-Daten und die Bilddaten sind über die Kontrollbildschirme 6 abrufbar. Über ein Koppelsystem 20 sind die Daten schließlich einer Datenfernübertragung 21 zuleitbar.

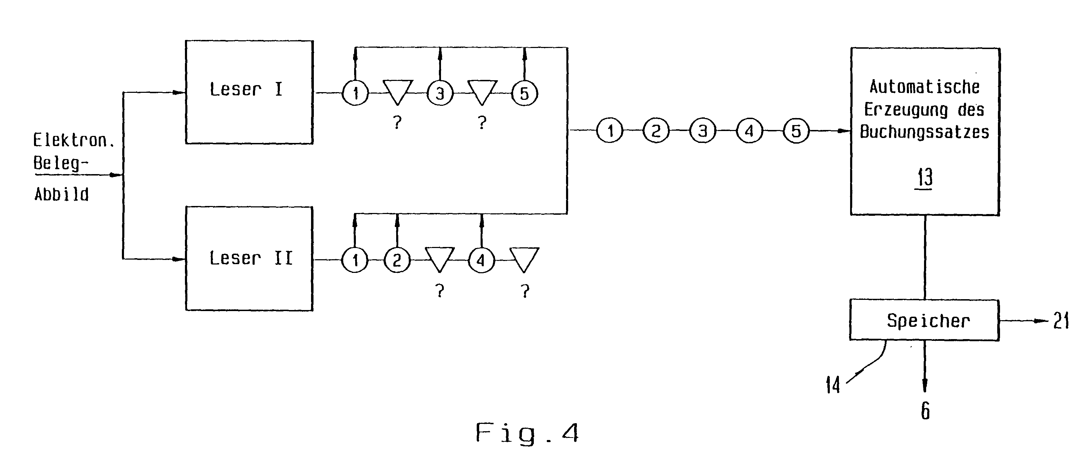

Das Flußschaubild gemäß Fig. 4 zeigt zwei parallel zueinander geschaltete Leser I, II, denen ein elektronisches Abbild des Beleges zur Interpretation zugeleitet wird. Während der Leser I aus beispielsweise einer Ziffernfolge die Ziffern 1, 3 und 5 als richtig erkennt und die Ziffern 2 und 4 nicht erkennt, erkennt der Leser II die Ziffern 1, 2 und 4 als richtig und erkennt nicht die Ziffern 3 und 5. Durch den Abgleich der erkannten Daten wird die Ziffernfolge insgesamt als richtig erkannt, und es ist keine manuelle Korrektur notwendig. Eine richtige Buchung kann erfolgen. Die Erkennungsqualität wird wesentlich verbessert.

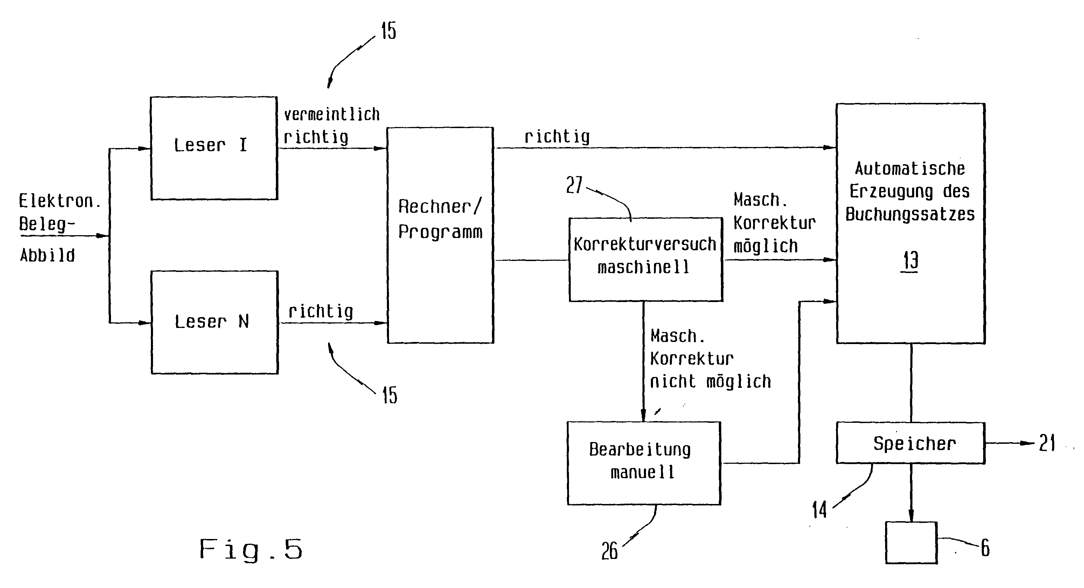

Anhand der Fig. 5 ist beispielsweise das Flußbild der Beleginterpretation in der Interpretationsstation 15 schematisch dargestellt. Die von der Kamera 10 erfaßten Belegdaten werden den Lesern I und II in Form eines elektronischen Abbildes des Beleges zugeleitet, welche eine Interpretation der Schrift mittels vorgegebener Schrifterkennungsverfahren durchführen. Bei einem Vergleich der Interpretationsergebnisse werden Diskrepanzen (Substitutionen) festgestellt, und es wird eine Überprüfung erzwungen. Diese maschinelle Überprüfung 27 führt - falls möglich - automatische Korrekturen durch, oder - falls nicht möglich - erzwingt eine manuelle Bearbeitung an der Bearbeitungsstation 26. Hierzu kann es sehr zweckmäßig sein, wenn die Erkennungsdiskrepanz auf dem in Echtzeit erfaßten Belegimage gekennzeichnet bzw. optisch hervorgehoben ist, so daß nicht der gesamte Beleg auf die Korrektheit der eingetragenen Daten überprüft werden muß. Das korrigierte Ergebnis wird einem Rechner 13 zugeleitet. Die Bearbeitungsstationen 6, 26 können identisch sein.

Nachfolgend sollen einige Beispiele für einige Auswertungsmöglichkeiten angegeben werden:
a.) 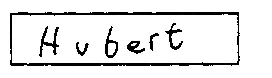
   Leser I liest: Hu6ert
   Leser II liest: Hubert

   Ein Unterschied wird festgestellt und entweder, weil 'alpha' zwischen 'alpha' wahrscheinlicher ist als 'numerisch' zwischen 'alpha', automatisch richtig gestellt oder eine automatische Wörterbuchfunktion findet "Hubert" als möglich und "Hu6ert" als nicht bekannt. In jedem Fall ist eine manuelle Korrektur nicht erforderlich und eine unentdeckte Falschlesung wird nicht weitergeleitet.
b.) 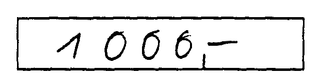
   Leser I liest: 1.060,--DM
   Leser II liest: 7.000,--DM
   Was ist richtig? (7060,--DM)

   Hier wäre mit hoher Wahrscheinlichkeit bisher eine Fehlbuchung erfolgt. Gemäß der Erfindung wird aufgrund der Erkennungsdiskrepanz eine Korrketur durch den Menschen 26 erzwungen, da eine maschinelle Korrektur 27 nicht möglich ist.
c.) Für den Fall b.) könnten auch Problemschriften für bestimmte Auftraggeber in Tabellen hinterlegt werden, die Ziffer 6 immer von Leser I und Ziffer 7 immer von Leser II gegenüber den Substitutionszeichen 0 bzw. 1 höher bewerten.
d.) 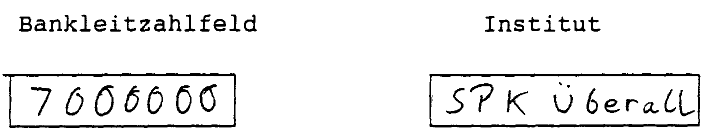
   Leser I liest: 7666600 SPK Überall
   Leser II liest: 7000000 SPK Überall

   Eine Erkennungsdiskrepanz wird festgestellt. Über die hinterlegte Tabelle ist ermittelbar, daß die Sparkasse Überall die Bankleitzahl 7 000 000 hat. Also hat Leser II richtig gelesen. Die Schreibweise läßt den Rückschluß zu, daß hier die Ziffer 0 ähnlich wie die Ziffer 6 gechrieben wird. Mit nur einer Erkennung wäre der Rückschluß nicht möglich. Also sollte zur Vermeidung einer Substitution und folgenden Fehlbuchung eine Kontrolle durch den Menschen angeboten werden, wenn bei diesem Problemkunden im Betragsfeld eine Ziffer 0 vorkommt. Es ist zu erwarten, daß der Problemkunde im Betragsfeld ähnlich schlecht geschrieben hat, und hierfür gibt es keinen automatischen Abgleich.

Die Lese- und Interpretationsstation beinhaltet auch ein OCR-Lesesystem 22, mittels welchem die Daten aus der Codierleiste in einem Rechner 23 erfaßt und auf Speichersystemen abgelegt werden können.

### Bezugszeichenliste

- 1.: Lesesystem
- 2.: Lese-, Interpretationsstation
- 3.: Sortierstation
- 4.: Systemmonitor
- 5.: Arbeitsstation für Codierzeilenbelege
- 6.: Kontrollbildschirm
- 7.: Druckereinrichtung
- 8.: Beleg
- 9.: Beleuchtungseinrichtung
- 10.: Kamerasystem mit Datenweg
- 11.: Spezialoptik
- 12.: Spiegelsystem
- 13.: Rechner
- 14.: Magnetplattenspeicher
- 15.: Interpretationsstation
- 16.: Komprimierungsstation/Dekomprimierungsstation
- 17.: Lesergruppe
- 18.: Lesergruppe
- 19.: Lesergruppe
- 20.: Koppelsystem
- 21.: Datenfernübertragung
- 22.: OCR-Leser mit Datenweg
- 23.: Rechner
- 24., 25.: Speichersystem für Codierzeilendaten
- 26.: Bearbeitungsstation manuell
- 27.: Korrekturstation maschinell

## Patentansprüche

1. Verfahren zum automatischen Erfassen und Erkennen von aufgezeichneten Informationen in Form von auf einer Mehrzahl von Belegen aufgezeichneter Schrift, wobei für einen jeden Beleg ein entsprechendes Erkennungsergebnis erzeugt wird, **dadurch gekennzeichnet,**
**daß** aus der Mehrzahl von Belegen stichprobenartig Belege mit aufgezeichneter Schrift derart ausgewählt werden, daß ein repräsentativer Querschnitt der Mehrzahl von Belegen ausgewählt wird, und
**daß** die Informationen der ausgewählten Belege mit den entsprechenden Erkennungsergebnissen verglichen werden und in Abhängigkeit von dem Ergebnis der Vergleiche Verfahrensparameter so verändert werden, daß die Erkennungsergebnisse optimiert werden.

2. Verfahren nach Anspruch 1, **dadurch gekennzeichnet, daß** die aufgezeichnete Information durch wenigstens zwei Schrifterkennungsverfahren (I,...N) unterschiedlicher Art interpretiert wird und daß ein Vergleich zwischen den Ereknnungsergebnissen der verschiedenen Schrifterkennungsverfahren durchgeführt wird, um die vermeintlich als richtig erkannten Daten eines Schrifterkennungsverfahren (Substitutionen) beim Auftreten von Unterschieden zu den jeweils anderen Ergebnissen des oder der anderen Schrifterkennungsverfahren zu erfassen.

3. Verfahren nach Anspruch 2, **dadurch gekennzeichnet, daß** die aufgezeichnete Information wenigstens zwei Schrifterkennungsverfahren parallel durchläuft.

4. Verfahren nach Anspruch 2, **dadurch gekennzeichnet, daß** die aufgezeichnete Information wenigstens zwei Schrifterkennungsverfahren nacheinander durchläuft.

5. Verfahren nach einem der vorangegangenen Ansprüche, **dadurch gekennzeichnet, daß** für die Erfassung und Erkennung der aufgezeichneten Information, insbesondere Schrift, universelle Schriftleseverfahren eingesetzt werden, wobei die einzelnen Erkennungsverfahren derart aufeinander abgestimmt werden, daß sie jeweils für die Erkennung einer unterschiedlichen Schriftart optimiert sind.

6. Verfahren nach Anspruch 5, **dadurch gekennzeichnet, daß** die universellen einzelnen Erkennungsverfahren derart aufeinander abgestimmt werden, daß sie jeweils für die Erkennung einzelner Bereiche, z. B. spezialisiert auf Betragsfelder, innerhalb der unterschiedlichen Schriftart optimiert sind.

7. Verfahren nach einem der vorhergehenden Ansprüche, **dadurch gekennzeichnet, daß** die Anzahl der universellen Schriftleseverfahren vorzugsweise der Anzahl der auf dem Informationsträger enthaltenen unterschiedlichen Schriftarten entspricht.

8. Verfahren nach einem der vorhergehenden Ansprüche 2 bis 7, **dadurch gekennzeichnet, daß** eine beim Vergleich der Ereknnungsergebnisse der verschiedenen Schriftleseverfahren auftretende Erkennungsdiskrepanz optisch dargestellt wird.

9. Verfahren nach einem der vorhergehenden Ansprüche, **dadurch gekennzeichnet, daß** nach dem Feststellen einer Erkennungsdiskrepanz eine maschinelle und/oder personelle Überprüfung erzwungen wird.

10. Verfahren nach einem der vorhergehenden Ansprüche, **dadurch gekennzeichnet, daß** die gelesenen Informationsdaten nach dem Feststellen einer Erkennungsdiskrepanz einer Zwangskorrektur unterzogen werden.

11. Verfahren nach Anspruch 10, **dadurch gekennzeichnet, daß** die Korrektur automatisch mit Hilfe von Algorithmen und/oder Datenabgleich anhand von Listen oder Wörterbüchern durchgeführt wird.

12. Verfahren nach Anspruch 10, **dadurch gekennzeichnet, daß** die Korrektur manuell durchgeführt wird.

13. Verfahren nach Anspruch 10, **dadurch gekennzeichnet, daß** die Korrektur automatisch mit Hilfe von aus der Information oder dem Informationsträger selbst erkennbaren Vergleichsdaten durchgeführt wird.

14. Verfahren nach einem der vorhergehenden Ansprüche **dadurch gekennzeichnet, daß** die Erkenntnisse der individuellen Schreibweisen eines jeweiligen Kunden in Tabellen eines in das Interpretationsverfahren integrierten Rechners hinterlegt werden.

15. Vorrichtung zur Durchführung des Verfahrens nach einem der Ansprüche 2 bis 14, **dadurch gekennzeichnet, daß** sie eine Dokumentenverarbeitungsstation aufweist, in welcher wenigstens zwei Lesestationen (I, II ...N) unterschiedlicher Schriftenerkennungsverfahren vorgesehen sind, die von jeder aufgezeichneten Information durchlaufen werden.

16. Vorrichtung nach Anspruch 15, **dadurch gekennzeichnet, daß** die Lesestationen (I, II) parallel geschaltet sind.

17. Vorrichtung nach Anspruch 15, **dadurch gekennzeichnet, daß** die Lesestationen hintereinander geschaltet sind.

18. Vorrichtung nach Anspruch 15, **dadurch gekennzeichnet, daß** die Lesestationen für die Erkennung von Universal-Schrift, Handblock- und/oder Maschinenschriften eingerichtet sind.

19. Vorrichtung nach einem der vorhergehenden Vorrichtungsansprüche, **dadurch gekennzeichnet, daß** die Verfahren der Lesestationen derart aufeinaner abgestimmt sind, daß sie jeweils für die Erkennung einer unterschiedlichen Schriftart und/oder einzelner Bereiche innerhalb der unterschiedlichen Schriftart optimiert sind.

20. Vorrichtung nach einem der vorhergehenden Vorrichtungsansprüche, **dadurch gekennzeichnet, daß** wenigstens eine Korrekturstation vorgesehen ist, welche von einem softwaregesteuerten Rechner gebildet ist.

21. Vorrichtung nach einem der vorhergehenden Vorrichtungsansprüche, **dadurch gekennzeichnet, daß** in der maschinellen Korrekturstation (27) eine Handschrift-Buchstaben-und/oder Ziffernfolge hinterlegt ist, welche zur Erstellung von handschriftlichen Vergleichsdaten für zukünftige Vorkommnise dient.

## Claims

1. Process for automatically detecting and recognising recorded information in the form of characters recorded on a plurality of documents, a corresponding recognition result being produced for each document, **characterised in that** documents with recorded characters are selected at random from the plurality of documents in such a manner that a representative cross-section of the plurality of documents is selected, and **in that** the information of the selected documents is compared with the corresponding recognition results and, depending on the result of the comparisons, process parameters are so changed that the recognition results are optimised.

2. Process according to claim 1, **characterised in that** the recorded information is interpreted by at least two character-recognition processes (I,...N) of different kinds, and **in that** a comparison is carried out between the recognition results of the different character-recognition processes in order to detect the data, estimated to be correct, of a character-recognition process (substitutions) when differences occur with respect to the other results of the other character-recognition process(es).

3. Process according to claim 2, **characterised in that** the recorded information runs through at least two character-recognition processes in parallel.

4. Process according to claim 2, **characterised in that** the recorded information runs through at least two character-recognition processes in succession.

5. Process according to any one of the preceding claims, **characterised in that** universal character-reading processes are used to detect and recognise the recorded information, especially characters, the individual recognition processes being so tuned to one another that they are each optimised for the recognition of a different kind of character.

6. Process according to claim 5, **characterised in that** the universal individual recognition processes are so tuned to one another that they are each optimised for the recognition of individual areas, for example specialised in amount fields, within the different kind of character.

7. Process according to any one of the preceding claims, **characterised in that** the number of universal character-reading processes preferably corresponds to the number of different kinds of character contained in the information carrier.

8. Process according to any one of the preceding claims 2 to 7, **characterised in that** a recognition discrepancy occurring during the comparison of the recognition results of the different character-reading processes is displayed optically.

9. Process according to any one of the preceding claims, **characterised in that**, when a recognition discrepancy has been established, a forced check is performed by a machine and/or by personnel.

10. Process according to any one of the preceding claims, **characterised in that** the information data read undergo forced correction when a recognition discrepancy has been established.

11. Process according to claim 10, **characterised in that** the correction is carried out automatically with the aid of algorithms and/or data-balancing with reference to lists or dictionaries.

12. Process according to claim 10, **characterised in that** the correction is carried out manually.

13. Process according to claim 10, **characterised in that** the correction is carried out automatically with the aid of comparison data recognisable from the information or the information carrier itself.

14. Process according to any one of the preceding claims, **characterised in that** the recognition of the individual writing styles of a particular customer is deposited in tables of a computer integrated into the interpretation process.

15. Apparatus for carrying out the process according to any one of claims 2 to 14, **characterised in that** the apparatus has a document-processing station within which are provided at least two reading stations (I, II ...N) which operate different character-recognition processes and through which each recorded item of information runs.

16. Apparatus according to claim 15, **characterised in that** the reading stations (I, II) are connected in parallel.

17. Apparatus according to claim 15, **characterised in that** the reading stations are connected in series.

18. Apparatus according to claim 15, **characterised in that** the reading stations are set up for the recognition of universal characters, hand-written block capital characters and/or typewritten characters.

19. Apparatus according to any one of the preceding apparatus claims, **characterised in that** the processes of the reading stations are tuned to each other in such a manner that they are each optimised for the recognition of a different kind of character and/or individual areas within the different kind of character.

20. Apparatus according to any one of the preceding apparatus claims, **characterised in that** at least one correction station which is formed by a software-controlled computer is provided.

21. Apparatus according to any one of the preceding apparatus claims, **characterised in that** a sequence of hand-written letters and/or numbers is deposited in the mechanical correction station (27) and is used to prepare hand-written comparison data for future events.

## Revendications

1. Procédé de saisie et d'identification automatique d'informations enregistrées, se présentant sous la forme d'écritures enregistrées sur une pluralité de documents, sachant qu'un résultat d'identification correspondant est généré pour chaque document, **caractérisé en ce que**, à partir de la pluralité de documents, sont choisis des documents à titre d'échantillons, portant une écriture enregistrée, **en ce qu'**un échantillon, représentatif de la pluralité de documents, est sélectionné, et **en ce que** les informations des documents sélectionnés sont comparées aux résultats d'identification correspondants et, en fonction du résultat des comparaisons, des paramètres de procédure sont modifiés de manière à optimiser les résultats de l'identification.

2. Procédé selon la revendication 1, **caractérisé en ce que** l'information enregistrée est interprétée par au moins deux procédés d'identification d'écriture (I, ...N) de type différent, et **en ce qu'**une comparaison est effectuée entre les résultats d'identification des différents procédés d'identification d'écriture, afin d'appréhender les données, dont on présume qu'elles sont correctement identifiées, d'un procédé d'identification d'écriture (substitutions) en cas de survenance de différences chaque fois par rapport aux autres résultats du ou des autres procédés d'identification d'écriture.

3. Procédé selon la revendication 2, **caractérisé en ce que** l'information enregistrée subit, en parallèle, au moins deux processus d'identification d'écriture.

4. Procédé selon la revendication 2, **caractérisé en ce que** l'information enregistrée subit, l'un après l'autre, au moins deux processus d'identification d'écriture.

5. Procédé selon l'une des revendications précédentes. **caractérisé en ce que**, pour saisir et identifier l'information enregistrée, en particulier une écriture, sont utilisés des processus de lecture d'écriture universels, les différents processus d'identification étant adaptés entre eux de manière à être chaque fois optimisés pour l'identification d'un type d'écriture différent.

6. Procédé selon la revendication 5, **caractérisé en ce que** les différents processus d'identification universels sont adaptés les uns les autres, de manière à être optimisés chacun pour l'identification de zones spécifiques, par exemple en étant spécialisés pour des champs de valeur, à l'intérieur des différents types d'écriture.

7. Procédé selon l'une des revendications précédentes, **caractérisé en ce que** le nombre de processus de lecture d'écriture universels correspond, de préférence, au nombre des différents types d'écriture contenus sur le support d'information.

8. Procédé selon l'une des revendications 2 à 7 précédentes, **caractérisé en ce qu'**une divergence d'identification, survenant lors de la comparaison des résultats d'identification des différents processus de lecture d'écriture, est représentée optiquement.

9. Procédé selon l'une des revendications précédentes, **caractérisé en ce que**, après constatation d'une divergence d'identification, un contrôle manuel et/ou personnel est rendu obligatoire.

10. Procédé selon l'une des revendications précédentes. **caractérisé en ce que** les données d'information ayant été lues sont soumises à une correction obligatoire, après constatation d'une divergence d'identification.

11. Procédé selon la revendication 10, **caractérisé en ce que** la correction est effectuée automatiquement à l'aide d'algorithmes et/ou d'adaptation des données, à l'aide de listes ou de dictionnaires.

12. Procédé selon la revendication 10, **caractérisé en ce que** la correction est effectuée manuellement.

13. Procédé selon la revendication 10, **caractérisé en ce que** la correction est effectuée automatiquement à l'aide de données de comparaison, identifiables depuis l'information ou bien le support d'information lui-même.

14. Procédé selon l'une des revendications précédentes, **caractérisé en ce que** les identifications des modes d'écriture individuels d'un client spécifique sont enregistrées dans des tableaux d'un ordinateur intégré dans le processus d'interprétation.

15. Dispositif de mise en oeuvre du procédé selon l'une des revendications 2 à 14, **caractérisé en ce qu'**il présente un poste de traitement de documents, dans lequel sont prévus au moins deux postes de lecture (I, II ...N) à processus d'identification d'écriture différents, dans lesquels passe chaque identification enregistrée.

16. Dispositif selon la revendication 15, **caractérisé en ce que** les postes de lecture (I, II) sont branchés en parallèle.

17. Dispositif selon la revendication 15, **caractérisé en ce que** les postes de lecture sont branchés les uns derrière les autres.

18. Dispositif selon la revendication 15, **caractérisé en ce que** les postes de lecture sont installés pour assurer l'identification de l'écriture universelle, des écritures manuscrites et/ou dactylographiques.

19. Dispositif selon l'une des revendications précédentes, **caractérisé en ce que** les processus des postes de lecture sont adaptés les uns envers les autres, de manière à être chaque fois optimisés pour l'identification d'un type d'écriture différent et/ou de différentes zones à l'intérieur du type d'écriture différent.

20. Dispositif selon l'une des revendications précédentes concernant le dispositif, **caractérisé en ce qu'**est prévu au moins un poste de correction, formé par un ordinateur commandé par un logiciel.

21. Dispositif selon l'une des revendications précédentes, **caractérisé en ce que**, dans le poste de correction (27), formé par une machine, est placée, en arrière plan, une succession de lettres et/ou de chiffres manuscrits, qui sert à établir des données de comparaison d'écritures manuelles pour des évènements futurs.
